# EUROPÄISCHE PATENTSCHRIFT

(11) **EP 4 405 281 B1**
(45) Veröffentlichungstag und Bekanntmachung des Hinweises auf die Patenterteilung: **01.10.2025**
(21) Anmeldenummer: 22753582.0
(22) Anmeldetag: 03.08.2022
(51) Int. Cl.: B65G 47/14, B65G 47/29, B65G 47/88

(54) **VEREINZELUNGSVORRICHTUNG FÜR PROFILE**
SEPARATING APPARATUS FOR PROFILES
APPAREIL DE SÉPARATION POUR PROFILÉS

(30) Priorität: 20.09.2021 AT 507362021
(43) Veröffentlichungstag der Anmeldung: 31.07.2024
(73) Patentinhaber: MOST Technik GmbH, 4817 St. Konrad (AT)
(72) Erfinder: MOSER, Friedrich, 4644 Scharnstein (AT)
(74) Vertreter: Hübscher & Partner Patentanwälte GmbH
(86) Internationale Anmeldenummer: PCT/AT2022/060271
(87) Internationale Veröffentlichungsnummer: WO 2023/039622

(56) Entgegenhaltungen:
- EP-A1- 0 365 102
- DE-A1- 2 320 033
- US-B1- 6 220 423

## Beschreibung

### Technisches Gebiet

Die Erfindung bezieht sich auf eine Vereinzelungsvorrichtung für Profile mit zwischen Auflageflächen aufeinanderfolgender Querförderer vorgesehenen Übergabeeinrichtungen, die in Drehschritten einer Welle zwischen einer Übernahmestellung und einer Übergabestellung verlagerbare, eine in der Übernahmestellung lediglich ein Profil untergreifende Mitnehmerfläche bildende Aufnahmen für mehrere Profile aufweisen.

### Stand der Technik

Insbesondere bei stapelbaren Profilen mit einer ausgeprägten Längserstreckung besteht die Gefahr, dass bei einem Aufgeben mehrerer einem Stapel entnommener Profile auf einen Querförderer die Profile nicht nur nebeneinander, sondern auch übereinander zu liegen kommen, was das Vereinzeln der Profile durch ein aufeinanderfolgendes Abnehmen der Profile vom Querförderer erschwert. Um allenfalls aufeinanderliegende Profile zu vereinzeln ist es bekannt (US 2 993 606), mehrere aufeinanderfolgende Querförderer in Form von abfallenden, eine Gleitbahn bildenden Auflageflächen und zwischen den Auflageflächen Übergabeeinrichtungen mit auf einer Welle angeordneten Übergabescheiben vorzusehen, die über den Umfang verteilte Aufnahmen für mehrere Profile umfassen. Diese Aufnahmen werden durch angenähert tangential verlaufende Aufnahmeflächen und radial verlaufende Mitnehmerflächen zwischen den Aufnahmeflächen begrenzt. In einer Übernahmestellung untergreift eine der Mitnehmerflächen das am Ende der Gleitbewegung entlang der Auflagefläche an der zugehörigen Aufnahmefläche anschlagende Profil. Unter der Voraussetzung, dass die Auflagebreite der Profile, also die Breite der Aufliegefläche, der radialen Erstreckung der Mitnehmerfläche entspricht, wird bei einem folgenden Drehschritt der Scheiben das an der Aufnahmefläche anliegende Profil zusammen mit gegebenenfalls auf diesem Profil aufliegenden Profilen durch die Mitnehmerfläche von der Auflagefläche des Querförderers abgehoben und der Auflagefläche des weiterführenden Querförderers übergeben. Während des Drehschritts von der Übernahmestellung in die Übergabestellung übernimmt die tangential ausgerichtete Aufnahmefläche die von der Mitnahmefläche vom vorausgehenden Querförderer abgehobenen Profile in einer nebeneinandergereihten Anordnung, sodass das oberste der übereinanderliegend übernommenen Profile als das in Förderrichtung vorderste der Auflagefläche des übernehmenden Querförderers übergeben wird. Die nunmehr nebeneinandergereihten Profile werden mithilfe der nachfolgenden Übergabeeinrichtung nacheinander durch aufeinanderfolgende Mitnehmerflächen vereinzelt einem weiteren Querförderer übergeben.

Nachteilig ist allerdings, dass zur Berücksichtigung von Profilen mit unterschiedlicher Auflagebreite den Aufnahmeflächen der Aufnahmen ein verstellbarer Anschlag zugeordnet werden muss, der die wirksame radiale Länge der Mitnehmerflächen begrenzt, sodass der Abstand des äußeren Endes der Mitnehmerflächen vom der Aufnahmefläche vorgelagerten Anschlag die Auflagebreite bestimmt, für die die Vereinzelungsvorrichtung eingestellt ist.

EP0365102A1 offenbart eine Vereinzelungsvorrichtung gemäß dem Oberbegriff des Anspruchs 1.

### Darstellung der Erfindung

Der Erfindung liegt somit die Aufgabe zugrunde, eine Vereinzelungsvorrichtung für Profile so auszugestalten, dass zur Anpassung an Profile gleicher Querschnittsform, aber unterschiedlicher Auflagebreite keine zusätzlichen, aufwendigen Konstruktionsmaßnahmen erforderlich werden.

Ausgehend von einer Vereinzelungsvorrichtung der eingangs geschilderten Art löst die Erfindung die gestellte Aufgabe dadurch, dass den Aufnahmen Anschlagnocken für die Profile zugeordnet sind, dass den Konturverlauf bestimmende Anschlagpunkte der Anschlagnocken einen Drehwinkel der Anschlagnocken und einen Abstand zur Auflagefläche des Querförderers festlegen, dass der durch die Anschlagpunkte in Abhängigkeit von der Querschnittsform und -größe der Profile festgelegte hintere Begrenzungsrand der Aufliegefläche zumindest den gleichen Abstand von der Welle wie das äußere Ende der Mitnehmerfläche aufweist und dass die Querförderer in Abhängigkeit vom Anschlag der Profile an einen in die Drehstellung für die Querschnittsform und -größe der zu vereinzelnden Profile gedrehten Anschlagnocken ansteuerbar sind.

Bei einer vorgegebenen Querschnittsform und -größe der zu vereinzelnden Profile bestimmt ein Konturpunkt eines aufliegenden Profils die Lage dessen Aufliegefläche in Bezug auf den Konturpunkt. Schlägt demnach ein durch einen Querförderer gefördertes Profil vorzugsweise mit einer Längskante an einem den Förderweg begrenzenden Anschlagnocken an, so kann aus der Stellung des Anschlagnockens die Lage der Aufliegefläche des Profils auf dem Querförderer abgeleitet werden. Dies gilt für unterschiedliche Querschnittsabmessungen, wenn die Anschlagpunkte insbesondere einer Profillängskante für unterschiedlich große Profilquerschnitte den Konturverlauf des Anschlagnockens über einen vorgegebenen Drehwinkelbereich bestimmen, sodass der einem bestimmten Drehwinkel zugehörige Anschlagpunkt den Abstand des Anschlagpunktes von der Auflagefläche des Querförderers und damit die Höhe der Profilkante über der Aufliegefläche für eine bestimmte Querschnittsform und -größe vorgibt.

In der Drehstellung für eine vorgegebene Querschnittsform und -größe der zu vereinzelnden Profile kann somit durch einen solchen Anschlagnocken der Förderweg der Profile so begrenzt werden, dass sich der in Förderrichtung hintere Begrenzungsrand der Aufliegefläche des anschlagenden Profils in einer vorbestimmten Lage befindet. Dies bedeutet, dass bei einer entsprechenden Auslegung des Konturverlaufs des Anschlagnockens eine übereinstimmende Lage des hinteren Begrenzungsrands der Aufliegefläche der anschlagenden Profile für alle Größen des Profilquerschnitts festgelegt werden kann.

Ist der Abstand des hinteren Begrenzungsrandes der Profilaufliegefläche von der Welle der Übergabeeinrichtung gleich dem Abstand des äußeren Endes der Mitnehmerfläche von der Welle, so wird bei einem nachfolgenden Drehschritt der Übergabeeinrichtung lediglich das Profil, dessen Lage auf dem Querförderer durch den Anschlagnocken bestimmt und durch die Drehung der Übergabeeinrichtung vom Anschlagnocken freigegeben wurde, mit allenfalls auf diesem Profil aufliegenden Profilen durch die Mitnehmerfläche vom Querförderer abgehoben und dem weiterführenden Querförderer zugeführt, und zwar bei der Übernahme von mehreren Profilen aufgrund der Kippdrehung in Förderrichtung hintereinander, wodurch das ordnungsgemäße Vereinzeln durch die Einzelaufnahme der dann nacheinander an den Anschlagnocken der nachfolgenden Übergabeeinrichtung anschlagenden Profile sichergestellt wird. Zur Anpassung an unterschiedliche Querschnittsgrößen der zu vereinzelnden Profile sind somit nur die Übergabeeinrichtungen in eine Ausgangsstellung zu drehen, in der die Anschlagnocken den Drehwinkel für die jeweilige Querschnittsgröße einnehmen, und die Querförderer in Abhängigkeit von der Anschlagstellung der Profile so anzusteuern, dass die Anschlagstellung der Profile bis zur Übernahme durch die Übergabeeinrichtungen erhalten bleibt, dass also die Förderung durch den Querförderer nach dem Anschlagen des Profils am Anschlagnocken für die Übergabe unterbrochen wird.

Um lediglich das Profil, dessen Lage durch den Anschlagnocken bestimmt wird, mithilfe der Mitnehmerfläche vom Querförderer abzuheben, darf der Abstand des äußeren Endes der Mitnehmerfläche von der Welle höchstens gleich dem Abstand des hinteren Begrenzungsrandes der Profilaufliegefläche des anschlagenden Profils von der Welle der Übergabeeinrichtung sein. Ein kleinerer Abstand ist möglich, solange der Profilschwerpunkt oberhalb der das Profil aufnehmenden Mitnehmerfläche zu liegen kommt. Unter diesen Voraussetzungen ist es auch möglich, von einem geraden Verlauf abweichende Profile zu vereinzeln. Allenfalls muss hierfür der die Anschlagstellung für solche Profile bestimmende Drehwinkel des Anschlagnockens geändert werden.

Um die Vereinzelungsleistung zu erhöhen, werden die einzelnen Übergabeeinrichtungen mit mehreren Aufnahmen und zugehörigen Anschlagnocken ausgerüstet. In diesem Fall empfiehlt es sich, die Übergabeeinrichtungen mit einander diametral gegenüberliegenden Aufnahmen und Anschlagnocken für die Profile zu versehen.

Da die Profile mithilfe der Übergabeeinrichtungen über deren Wellen hinweg den nachfolgenden Querförderer übergeben werden, ergeben sich einfache Konstruktionsvoraussetzungen, wenn die Querförderer in Förderrichtung ansteigend der Höhe nach gegeneinander versetzt angeordnet sind, sodass aufgrund des Höhenversatzes einfache Verhältnisse für eine vorzugsweise um angenähert 90° gedrehte Profilübergabe auf den anschließenden Querförderer erreicht werden.

### Kurze Beschreibung der Erfindung

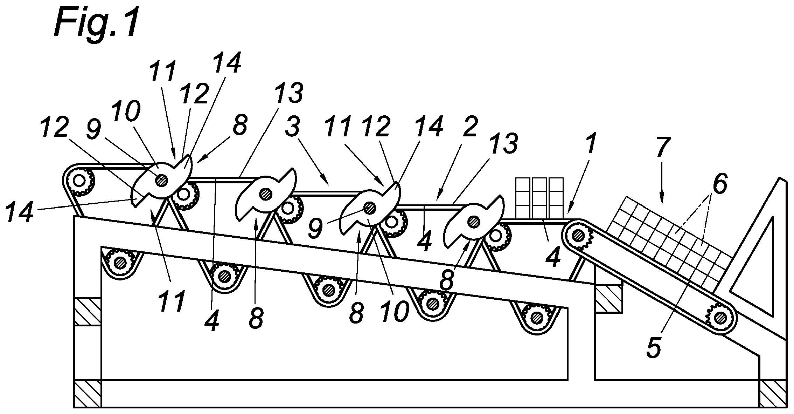

In der Zeichnung ist der Erfindungsgegenstand beispielsweise dargestellt. Es zeigen
- Fig. 1: eine erfindungsgemäße Vereinzelungsvorrichtung in einer schematischen Seitenansicht und die
- Fig. 2: bis 4 eine Übergabeeinrichtung in einer schematischen Seitenansicht in mehreren Stellungen in einem größeren Maßstab.

### Wege zur Ausführung der Erfindung

Eine erfindungsgemäße Vereinzelungsvorrichtung weist mehrere in Förderrichtung hintereinander angeordnete Querförderer auf, von denen lediglich die ersten drei mit den Bezugszeichen 1, 2, 3 versehen sind. Der Querförderer 1, der wie die anderen Querförderer aus mit Abstand nebeneinandergereihten, umlaufend angetriebenen Zugmitteln 4, beispielsweise Zahnriemen oder Ketten, aufgebaut ist, wird über einen Aufgabeförderer 5 mit zu vereinzelnden Profilen 6 eines Profilstapels 7 beschickt.

Zwischen den Querförderern sind Übergabeeinrichtungen 8 vorgesehen, die die Profile 6 von dem vorausgehenden Querförderer abnehmen und dem nachfolgenden Querförderer übergeben. Diese Übergabeeinrichtungen 8 weisen je auf einer gemeinsamen Welle 9 sitzende, zwischen den Zugmitteln 4 angeordnete Scheiben 10 auf, die zumindest eine Aufnahme 11 für mehrere Profile 6 bilden. Im dargestellten Ausführungsbeispiel sind je zwei einander diametral gegenüberliegende Aufnahmen 11 je Scheibe 10 vorgesehen. Die Aufnahmen 11 sind mit einer Mitnehmerfläche 12 versehen, die in einer die Welle 9 enthaltenden Ebene verlaufen. Da die Wellen 9 außerdem in einer Ebene liegen, die durch die Auflagefläche 13 der die Profile 6 anliefernden Querförderer bestimmt wird, untergreifen diese Mitnehmerflächen 12 in der Übernahmestellung der Übergabeeinrichtungen 8 die angelieferten, auf der Auflagefläche 13 aufliegenden Profile 6, sodass diese Profile 6 bei einem Drehschritt der Übergabeeinrichtungen 8 vom jeweils vorausgehenden Querförderer abgehoben und auf den anschließenden Querförderer unter einer Drehung von vorzugsweise 90° übertragen werden.

Den Aufnahmen 11 sind auf der den Mitnehmerflächen 12 abgewandten Seite Anschlagnocken 14 für die Profile 6 zugeordnet. Der Konturverlauf 15 dieser Anschlagnocken 14 wird durch Anschlagpunkte 16 bestimmt, die sich bevorzugt durch eine Längskante der Profile 6 aufgrund unterschiedlicher Querschnittsgrößen der Profile 6 ergeben, wenn jedem Anschlagpunkt 16 ein gesonderter Drehwinkel α des Anschlagnockens 14 zugeordnet wird. Da der Abstand h eines Anschlagpunktes 16 von der Auflagefläche 13 des Querförderers bei einem diesem Anschlagpunkt 16 zugehörigen Drehwinkel α des Anschlagnockens 14 dem Höhenabstand des den Anschlagpunkt 16 bestimmenden, vorzugsweise auf einer Profillängskante liegenden Konturpunkts des Profils 6 von dessen Aufliegefläche 17 entspricht, gibt der Anschlagnocken 14 in einer bestimmten Drehlage einen Abstand h einer Profillängskante von der Auflagefläche 13 vor, sodass die Anschlaglage der Profile 6 mit einem entsprechenden Höhenabstand h der Profillängskante von der Aufliegefläche 17 eindeutig bestimmt ist.

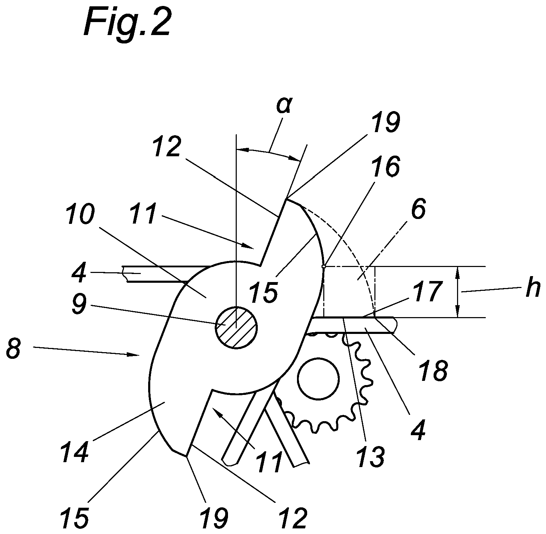

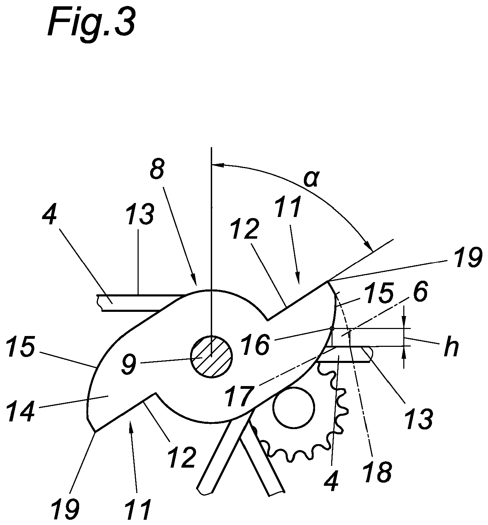

Dies bedeutet, dass bei einer entsprechenden Auslegung des Konturverlaufs 15 der Anschlagnocken 14 der Abstand des in Förderrichtung hinteren Begrenzungsrandes 18 der Aufliegefläche 17 des am Anschlagnocken 14 anliegenden Profils 6 von der Welle 9 dem Abstand des äußeren Endes 19 der Mitnehmerfläche 12 von der Welle 9 angepasst werden kann, wie dies in den Fig. 2 und 3 für zwei der Einfachheit halber im Querschnitt quadratische Profile 6 unterschiedlicher Größe dargestellt ist. Die durch den Anschlagnocken 14 aufgrund seiner Drehstellung in Abhängigkeit von der Größe des Profilquerschnitts begrenzte Förderstrecke auf dem der Übergabeeinrichtung 8 vorausgehenden Querförderer stellt somit sicher, dass bei einem anschließenden Drehschritt der Übergabeeinrichtung 8 lediglich das vorderste Profil 6 durch die Mitnehmerfläche 12 vom Querförderer abgehoben wird, nicht aber auch ein daran anschließendes, weil der Konturverlauf 15 des Anschlagnockens 14 die Förderstrecke der Profile 6 mit unterschiedlich großem Querschnitt so begrenzt, dass sich für alle Querschnittsgrößen eine übereinstimmende Lage des hinteren Begrenzungsrands 17 der Aufliegefläche des anschlagenden Profils 6 ergibt.

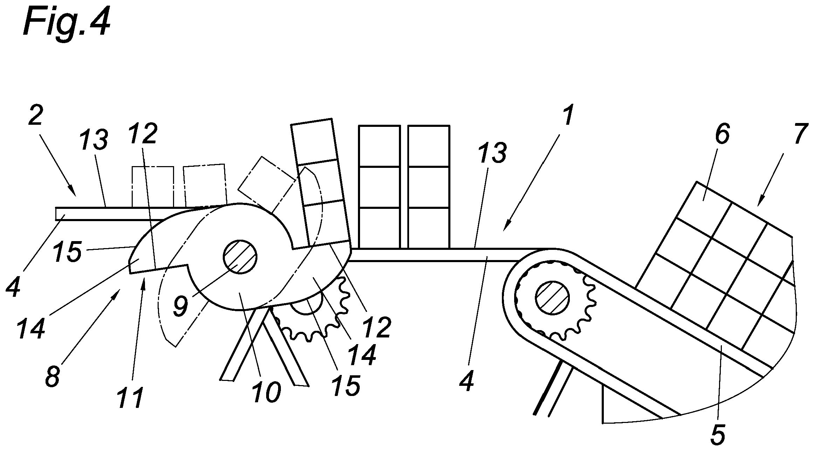

Anhand der Fig. 4 wird die Vereinzelung der Profile 6 für den Fall näher erläutert, dass mehrere Profile 6 aus dem Profilstapel 7 auf dem Querförderer 1 übereinander zu liegen kommen. Der Förderweg des vordersten Profils 6 mit den auf ihm aufliegenden Profilen 6 wird durch einen Anschlagnocken 14 der Übergabeeinrichtung 8 zwischen den Querförderern 1 und 2 in der oben beschriebenen Weise so begrenzt, dass die beim nachfolgenden Drehschritt der Übergabeeinrichtung 8 das vorderste Profil 6 untergreifende Mitnehmerfläche 12 nur dieses vorderste Profil 6 mit den aufliegenden Profilen 6 vom Querförderer 1 abhebt. Während der Drehung der Übergabeeinrichtung 8 werden die aufeinanderliegenden Profile 6 auf den anschließenden Querförderer 2 unter einer Drehung abgekippt, sodass sie in der Regel hintereinander auf dem Querförderer 2 zu liegen kommen. Auf dem Querförderer 2 werden die Profile 6 der Übergabeeinrichtung 8 zum Querförderer 3 zugeführt, wobei diese Übergabeeinrichtung 8 den Förderweg des vordersten Profils 6 auf dem Querförderer 2 mithilfe eines entsprechend drehverstellten Anschlagnockens 14 wieder so begrenzt, dass mit dem anschließenden Drehschritt lediglich das vorderste Profil 6 von der Mitnehmerfläche 12 der Aufnahme 11 erfasst werden kann. Nach dieser Übergabe des vordersten Profils 6 werden die nachfolgenden Profile 6 in analoger Art nacheinander von der Übergabeeinrichtung 8 zwischen den Querförderern 2, 3 einzeln erfasst und an den Querförderer 3 übergeben, von dem sie vereinzelt abgenommen werden können.

Da die Profile 6 bei der Übergabe auf einen nachfolgenden Querförderer durch die Übergabeeinrichtung 8 um ihre Längsachse gedreht werden, kann es für die an den weiterfördernden Querförderer anschließende Übergabeeinrichtung 8 erforderlich sein, Anschlagnocken 14 mit einem an den gedrehten Profilquerschnitt angepassten Kurvenverlauf 15 vorzusehen.

Sollten im Bereich des Querförderers 2 oder 3 noch immer Profile 6 übereinanderliegen, erfolgt die Vereinzelung dieser übereinanderliegenden Profile 6 in der im Zusammenhang mit dem Querförderer 1 geschilderten Weise.

## Patentansprüche

1. Vereinzelungsvorrichtung für Profile (6) mit zwischen Auflageflächen (13) aufeinanderfolgender Querförderer (1, 2, 3) vorgesehenen Übergabeeinrichtungen (8), die in Drehschritten einer Welle (9) zwischen einer Übernahmestellung und einer Übergabestellung verlagerbare, eine in der Übernahmestellung lediglich ein Profil (6) untergreifende Mitnehmerfläche (12) bildende Aufnahmen (11) für mehrere Profile (6) aufweisen, **dadurch gekennzeichnet, dass** den Aufnahmen (11) Anschlagnocken (14) für die Profile (6) zugeordnet sind, dass den Konturverlauf (15) der Anschlagnocken (14) bestimmende Anschlagpunkte (16) einen Drehwinkel (α) der Anschlagnocken (14) und einen Abstand (h) zur Auflagefläche (13) des Querförderers (1, 2, 3) festlegen, dass der durch die Anschlagpunkte (16) in Abhängigkeit von der Querschnittsform und -größe der Profile (6) festgelegte hintere Begrenzungsrand (18) der Aufliegefläche (17) zumindest den gleichen Abstand von der Welle (9) wie das äußere Ende (19) der Mitnehmerfläche (12) aufweist und dass die Querförderer (1, 2, 3) in Abhängigkeit vom Anschlag der Profile (6) an einen in die Drehstellung für die Querschnittsform und -größe der zu vereinzelnden Profile (6) gedrehten Anschlagnocken (14) ansteuerbar sind.

2. Vereinzelungsvorrichtung nach Anspruch 1, **dadurch gekennzeichnet, dass** die Übergabeeinrichtungen (8) einander diametral gegenüberliegende Aufnahmen (11) für die Profile (6) aufweisen.

3. Vereinzelungsvorrichtung nach Anspruch 1oder 2, **dadurch gekennzeichnet, dass** die Querförderer (1, 2, 3) in Förderrichtung ansteigend der Höhe nach gegeneinander versetzt angeordnet sind.

## Claims

1. Separating device for profiles (6) with transfer devices (8) provided between bearing surfaces (13) of successive transverse conveyors (1, 2, 3), which transfer devices (8) have receptacles (11) for a plurality of profiles (6), which receptacles (11) are displaceable in rotary steps of a shaft (9) between a pick-up position and a transfer position and form a driver surface (12) which in the pick-up position engages under only one profile (6), **characterized in that** stop cams (14) for the profiles (6) are associated with the receptacles (11), that stop points (16) determining the contour (15) of the stop cams (14) define an angle of rotation (α) of the stop cams (14) and a distance (h) to the bearing surface (13) of the transverse conveyor (1, 2, 3), that the rear boundary edge (18) of the bearing surface (17) defined by the stop points (16) depending on the cross-sectional shape and size of the profiles (6) is at least at the same distance from the shaft (9) as the outer end (19) of the driver surface (12) and that the transverse conveyors (1, 2, 3) can be controlled in dependence on the stop of the profiles (6) at a stop cam (14) rotated into the rotational position for the cross-sectional shape and size of the profiles (6) to be separated.

2. Separating device according to claim 1, **characterised in that** the transfer devices (8) have diametrically opposite receptacles (11) for the profiles (6).

3. Separating device according to claim 1 or 2, **characterised in that** the transverse conveyors (1, 2, 3) are arranged offset from one another in increasing height in the conveying direction.

## Revendications

1. Appareil de séparation pour profilés (6) comprenant des moyens de transfert (8) qui sont prévus entre des surfaces porteuses (13) de transporteurs transversaux successifs (1, 2, 3), qui présentent des moyens de réception (11) pour plusieurs profilés (6) qui peuvent être déplacés lors des étapes de rotation d'un arbre (9) entre une position de réception et une position de transfert et qui forment une surface de prise (12) qui dans la position de réception ne vient s'appliquer que sous un seul profilé (6),
**caractérisé en ce que** des cames de butée (14) pour les profilés (6) sont associées aux moyens de réception (11), **en ce que** des points de butée (16) déterminant le contour (15) des cames de butée (14) définissent un angle de rotation (α) des cames de butée (14) et une distance (h) par rapport à la surface porteuse (13) du transporteur transversal (1, 2, 3), **en ce que** le bord de délimitation arrière (18) de la surface d'appui (17), bord qui est défini par les points de butée (16) en fonction de la forme transversale et de la dimension transversale des profilés (6), est au moins à la même distance de l'arbre (9) que l'extrémité extérieure (19) de la surface de prise (12) et **en ce que** les transporteurs transversaux (1, 2, 3) peuvent être commandés en fonction de la mise en butée des profilés (6) contre une came de butée (14) tournée en position de rotation pour la forme transversale et la dimension transversale des profilés (6) à séparer.

2. Appareil de séparation selon la revendication 1, **caractérisé en ce que** les moyens de transfert (8) ont des moyens de réception (11) pour les profilés (6) qui sont diamétralement opposés les uns par rapport aux autres.

3. Appareil de séparation selon la revendication 1 ou 2, **caractérisé en ce que** les transporteurs transversaux (1, 2, 3) sont disposés de manière décalée les uns par rapport aux autres dans la direction de transport, ce qui augmente la hauteur.
